# EUROPÄISCHE PATENTSCHRIFT

(11) **EP 2 502 489 B1**
(45) Veröffentlichungstag und Bekanntmachung des Hinweises auf die Patenterteilung: **18.06.2014**
(21) Anmeldenummer: 12151710.6
(22) Anmeldetag: 19.01.2012
(51) Int. Cl.: A01K 5/02

(54) **Fütterungsanlage mit einem Misch- oder Vorratsbehälter**
Feeding assembly with a mixing or storage container
Installation d'alimentation dotée d'une réservoir de mélange ou de stockage

(30) Priorität: 25.03.2011 AT 4252011
(43) Veröffentlichungstag der Anmeldung: 26.09.2012
(73) Patentinhaber: Schauer Agrotronic GmbH, 4731 Prambachkirchen (AT)
(72) Erfinder: Schweizer, Günther, 4074 Stroheim (AT)
(74) Vertreter: Ofner, Clemens

(56) Entgegenhaltungen:
- EP-A1- 0 373 147
- EP-A2- 0 956 765
- AT-U1- 8 203
- US-A- 5 143 257

## Beschreibung

Die Erfindung bezieht sich auf eine Fütterungsanlage mit einem Misch- oder Vorratsbehälter, aus dem über eine Dosiereinrichtung, z. B. eine Zellradschleuse, Futterportionen in eine zu gesteuert freigebbaren Auslässen führende Futterleitung einbringbar sind, die Teil einer von einer Druckluftleitung beaufschlagbaren Luftförderanlage ist.

Derartige Fütterungsanlagen können wahlweise mit gemischtem Trockenfutter, angefeuchtetem Futter oder auch einer teilflüssigen Futtermischung beschickt werden, wobei die Möglichkeit besteht, das Futter an der Ausgabestelle zusätzlich mit Flüssigkeit, insbesondere Wasser zu versetzen und dadurch aus trockenem Futter ein Breifutter zu erhalten. Beispiele für eine derartige Fütterungsanlage entnimmt man der AT 391 585 und der EP 0 373 147. Im Normalbetrieb werden über die Steuereinrichtung und die Zubringereinrichtung die jeweiligen Größen der an der jeweiligen Abgabestelle ausgeblasenen Futterportionen bestimmt. Anschließend wird der erwähnte Auslass geschlossen und der Auslass der nächsten Futterabgabestelle geöffnet. Um Spritzer zu vermeiden, werden an den Abgabestellen Luftabscheider vorgesehen. In den meisten Fällen ist die Futterleitung als Ringleitung ausgelegt. In vielen Fällen ergibt sich die Forderung, zusätzlich zu dem aus dem Mischbehälter entnommenen Futter Futterergänzungsmittel, z. B. Rohfaser, Heu, Strohhäcksel u. dgl. Stoffe einzusetzen. Hier ergibt sich das Problem, dass derartige Stoffe meist im Mischbehälter nicht ordnungsgemäß mit den anderen Futterzutaten vermischt werden können und insbesondere auch die Dosiereinrichtung durch das Material verstopft werden kann, so dass eine entsprechende Verwendung der Fütterungsanlage von Haus aus als unzulässig ausscheidet. Es ist zwar aus der AT 008 203 U1 bekannt, kleine Mengen an Futterzusätzen, z. B. Medikamenten, Spurenelementen oder Vitaminen, dem in der Futterleitung transportierten Futter über eine Einspritzeinrichtung zuzuführen, doch ist eine entsprechende Zufuhreinrichtung für sperriges Material der genannten Art ungeeignet. Das genannte Material und auch Einstreumaterial werden bisher über gesonderte Förderer oder einfach durch gesonderte Zubringer oder von Hand aus an die jeweilige Verwendungsstelle verbracht.

Es ist auch aus EP 0 951 765 bekannt eine Zugabe aus zwei Behältern zuzuführen und aus US 5 143 257 eine Dosierung flüssiger Zusätze durch einer Bypassleitung auszuführen.

Aufgabe der Erfindung ist eine Verbesserung einer Fütterungsanlage der eingangs genannten Art, mit dem Ziel, auch eine Zufuhr der erwähnten kritischen Materialien unter Verwendung eines Großteiles der bestehenden Fütterungsanlage zu ermöglichen.

Die gestellte Aufgabe wird dadurch gelöst, dass ein vor dem Mischbehälter bzw. der Futterdosiereinrichtung mit der Druckluftleitung und nach der Futterdosiereinrichtung mit der Futterleitung verbindbare Bypassleitung vorgesehen ist, die über einen Zubringer von einem Vorrat mit im Mischbehälter mit dem Futter nicht oder schlecht mischbaren Futterergänzungsmitteln, wie Rohfaser, Heu oder zerkleinertem Stroh, als Futterbeigabe und/oder mit Einstreumaterial beschickbar ist.

Durch die direkte Zufuhr des kritischen Materials über den der Dosiereinrichtung für die Futterportionen nachgeordneten Teil der Futterleitung werden die erwähnten Probleme beseitigt. Je nach den Betriebsverhältnissen können verschiedene Arten der Futter- und Sondermaterialzubringung eingesetzt werden. In manchen Fällen kann das Material während der Futterzuleitung zu einer Abgabestelle in die Futterleitung eingetragen werden. Es ist aber auch möglich, die Zubringung des Mischfutters und Zubringung des anderen Materials zu einer Abgabestelle in besonderen Arbeitszyklen vorzunehmen. Dies wird in Weiterbildung der Erfindung dadurch erreicht, dass die Bypassleitung über gesteuerte Absperrorgane mit der Druckluftleitung und der Futterleitung verbunden ist und in der Druckluftleitung dem Einlass der Bypassleitung nachgeordnet vor der Futterdosiereinrichtung ein weiteres gesteuertes Absperrorgan vorgesehen ist. Die Absperrorgane können von der üblicherweise vorgesehenen Steuereinheit ebenso wie die beiden Dosiereinrichtungen entsprechend gesteuert werden. Nach einer der vielen Möglichkeiten kann man das zusätzliche Material, auch z. B. in Fütterungspausen, zu den Abgabestellen fördern.

Für die Auswahl verschiedener Bereiche für Futter und Zusätze an den Abgabestellen wird erfindungsgemäß in der Futterleitung dem Auslass der Bypassleitung nachgeordnet eine insbesondere als gesteuerter Rotationsverteiler ausgebildete Verteilereinrichtung vorgesehen, über welche die Futterleitung je nach Einstellung mit einem zu nachfolgenden Abgabestellen weiterführenden Leitungsteil der Futterleitung, einem zu einem Futtertrog führenden Auslass bzw. einem Aufnahmebehälter für das sperrige Material und gegebenenfalls einem Auslass für Einstreumaterial verbindbar ist.

Derzeit wird eine Ausführung bevorzugt, nach welcher der Zubringer für das zusätzliche Material als gesteuerte Förderschnecke ausgebildet ist, die sich in der Praxis für die meisten zu fördernden Materialien besonders gut eignet.

Weitere Einzelheiten und Vorteile des Erfindungsgegenstandes entnimmt man der nachfolgenden Zeichnungsbeschreibung.

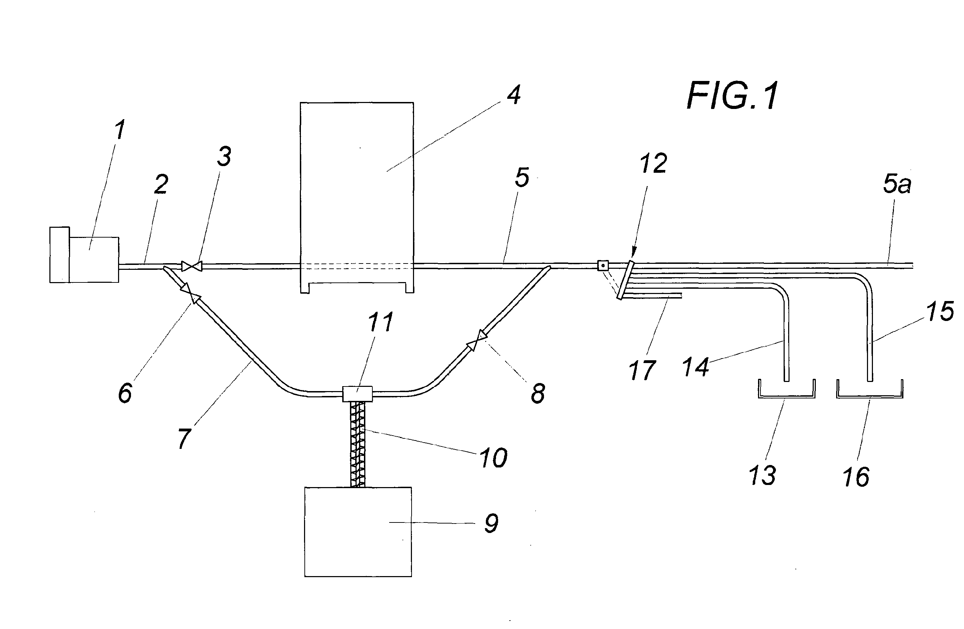

- Fig. 1: zeigt in schematischer Darstellungsweise den grundsätzlichen Aufbau einer erfindungsgemäßen Fütterungsanlage.

Beim dargestellten Ausführungsbeispiel beaufschlagt ein Druckluftgenerator 1, z. B. ein sogenannter Seitenkanalverdichter, eine Druckluftleitung 2, die über ein gesteuertes Absperrorgan 3 in einen Mischbehälter 4 führt, in dem eine Zellradschleuse Futterportionen in die nun als Futterleitung 5 dienende Leitung einträgt.

Vor dem Absperrorgan 3 zweigt über ein Absperrorgan 6 von der Leitung 2 eine Bypassleitung 7 ab, die über ein weiteres Absperrorgan 8 mit dem dem Mischbehälter 4 nachgeordneten Teil 5 der Futterleitung verbunden ist. Die Bypassleitung 7 wird von einem Vorratsbehälter 9 aus über eine Förderschnecke 10 über eine Einbringungseinrichtung 11 mit dem zu fördernden zusätzlichen Material beschickt und trägt dieses im Betriebszustand in die Futterleitung 5 ein. Am Ende des erwähnten Futterleitungsteils 5 ist ein sogenannter Rotationsverteiler 12 vorgesehen, der in seiner Grundform u. a. aus der AT 004 679 U1 bekannt ist und je nach seiner Drehstellung des Futterleitungsteil 5 mit einem weiterführenden Teil 5a der Futterleitung einer zu einem Trog 13 führenden Leitungsteil 14 bzw. einem Leitungsteil 15 führt, der einen Auffangbehälter 16 für das zusätzliche Material beaufschlagt. Ein weiteres Leitungsende 17 kann beispielsweise als Auslass für Einströmmaterial dienen bzw. in seinem Verteilerrohr oder -schlauch für solches Material verbunden werden.

## Patentansprüche

1. Fütterungsanlage mit einem Misch- oder Vorratsbehälter (4) aus dem über eine Dosiereinrichtung, z. B. eine Zellradschleuse, Futterportionen in eine zu gesteuert freigebbaren Auslässen führende Futterleitung (5) einbringbar sind, die Teil einer von einer Druckluftleitung (2) beaufschlagbaren Luftförderanlage ist, **dadurch gekennzeichnet, dass** ein vor dem Mischbehälter bzw. der Futterdosiereinrichtung (4) mit der Druckluftleitung (2) und nach der Futterdosiereinrichtung (4) mit der Futterleitung (5) verbindbare Bypassleitung (7) vorgesehen ist, die über einen Zubringer (10, 11) von einem Vorrat (9) mit im Mischbehälter (1) mit dem Futter nicht oder schlecht mischbaren Futterergänzungsmitteln, wie Rohfaser, Heu oder zerkleinertem Stroh, als Futterbeigabe und/oder mit Einstreumaterial beschickbar ist.

2. Fütterungsanlage nach Anspruch 1, **dadurch gekennzeichnet, dass** die Bypassleitung (7) über gesteuerte Absperrorgane (6, 8) mit der Druckluftleitung (2) und der Futterleitung (5) verbunden ist und in der Druckluftleitung (2) dem Einlass (6) der Bypassleitung (7) nachgeordnet vor der Futterdosiereinrichtung (4) ein weiteres gesteuertes Absperrorgan (3) vorgesehen ist.

3. Fütterungsanlage nach den Ansprüchen 1 und 2, **dadurch gekennzeichnet, dass** in der Futterleitung (5) dem Auslass (8) der Bypassleitung (7) nachgeordnet eine insbesondere als gesteuerter Rotationsverteiler (12) ausgebildete Verteilereinrichtung vorgesehen ist, über welchen die Futterleitung (5) je nach Einstellung mit einem weiterführenden Leitungsteil (5a) der Futterleitung (5), einem zu einem Futtertrog (13) führenden Auslass (14) bzw. einem Aufnahmebehälter (16) für das sperrige Material und gegebenenfalls einem Auslass (17) für Einstreumaterial verbindbar ist.

4. Fütterungsanlage nach einem der Ansprüche 1 bis 3, **dadurch gekennzeichnet, dass** der Zubringer für das zusätzliche Material als gesteuerte Förderschnecke 10 ausgebildet ist.

## Claims

1. Feeding assembly comprising a mixing or storage container (4) from which food portions can be brought to a feed line (5) via a metering unit, e.g. a rotary star valve, which feed line (5) leads to outlets which can be released in a controlled manner and is a part of an air conveyor system which can be charged via a compressed air line (2), **characterized in that** a bypass line (7) is provided which can be connected with the compressed air line (2) upstream of the mixing container and/or the fodder metering unit (4), and which can be connected with the feed line (5) downstream of the fodder metering unit (4), which bypass line (7) can be fed via a feeding device (10, 11) from a storage (9) with feed supplements as feed additions which are not or poorly mixable with the fodder in the mixing container (1), such as crude fiber, hay or chopped straw, and/or can be fed with bedding material.

2. Feeding assembly according to claim 1, **characterized in that** the bypass line (7) is connected with the compressed air line (2) and the feed line (5) via controlled shut-off devices (6, 8), and another controlled shut-off device (3) is provided in the compressed air line (2) downstream of the inlet (6) of the bypass line (7) and upstream of the fodder metering unit (4).

3. Feeding assembly according to claims 1 and 2, **characterized in that** a distribution device, in particular in the form of a controlled rotary distributor (12), is provided in the feed line (5) downstream of the outlet (8) of the bypass line (7), by means of which distribution device the feed line (5) can be connected to a continuative feeding part (5a) of the feed line (5), an outlet (14) leading to a feeding through (13) and/or a receiving container (16) for the bulky material, and optionally to an outlet (17) for bedding material in dependence of the setting.

4. Feeding assembly according to one of claims 1 to 3, **characterized in that** the feeding device for the additional material is provided in the form of a controlled screw conveyor (10).

## Revendications

1. Installation d'alimentation dotée d'un réservoir de mélange ou de stockage (4) à partir duquel des portions d'aliment sont acheminées via un dispositif de dosage, par exemple un sas rotatif, à un conduit d'aliment (5) conduisant vers des sorties pouvant être ouvertes de façon commandée, le conduit d'aliment (5) faisant partie d'une installation de transport par air comprimé mise sous pression à l'aide d'un conduit à air comprimé (2), **caractérisée en ce qu'**un conduit by-pass (7) est relié en amont du réservoir de mélange ou du dispositif de dosage (4) au conduit à air comprimé (2) et en aval du dispositif de dosage (4) au conduit d'aliment (5), le conduit by-pass (7) recevant depuis un stockage (9), à l'aide d'un dispositif d'approvisionnement (10, 11), des additifs d'alimentation tels que des fibres, du foin ou de la paille hachée, comme additif d'aliment ou adjuvant qui ne sont pas ou seulement difficilement à mélanger avec l'aliment dans le réservoir de mélange (4).

2. Installation d'alimentation selon la revendication 1, **caractérisée en ce que** le conduit by-pass (7) est relié au conduit d'air comprimé (2) et au conduit d'aliment (5) par des vannes commandées (6, 8) et **en ce qu'**une autre vanne commandée (3) est disposée en aval de l'entrée (6) du conduit by-pass (7) et en amont du dispositif de dosage d'aliment (4).

3. Installation d'alimentation selon la revendication 1 ou 2, **caractérisée en ce qu'**un dispositif de distribution, plus particulièrement sous la forme d'un distributeur rotatif (12), est disposé dans le conduit d'aliment (5) en aval de la sortie (8) du conduit by-pass (7), par lequel distributeur rotatif le conduit d'aliment (5) est relié, selon la position de commande, à un tronçon de conduit supplémentaire (5a) du conduit d'aliment (5), à une sortie (14) menant à une mangeoire (13), ou à un réceptacle (16) pour la matière encombrante et, le cas échéant, à une sortie (17) pour l'additif d'aliment.

4. Installation d'alimentation selon une des revendications 1 à 3, **caractérisée en ce que** le dispositif d'approvisionnement se présente sous la forme d'une vis sans fin commandée (10).
